# EUROPÄISCHE PATENTSCHRIFT

(11) **EP 1 121 668 B1**
(45) Veröffentlichungstag und Bekanntmachung des Hinweises auf die Patenterteilung: **23.10.2002**
(21) Anmeldenummer: 99952424.2
(22) Anmeldetag: 17.08.1999
(51) Int. Cl.: G07C 9/00

(54) **VORRICHTUNG UND VERFAHREN ZUR BIOMETRISCHEN IDENTIFIKATION EINER PERSON**
DEVICE AND METHOD FOR IDENTIFYING A PERSON BY BIOMETRIC CHARACTERISTICS
DISPOSITIF ET PROCEDE POUR L'IDENTIFICATION BIOMETRIQUE D'UNE PERSONNE

(30) Priorität: 14.10.1998 DE 19847415
(43) Veröffentlichungstag der Anmeldung: 08.08.2001
(73) Patentinhaber: SIEMENS AKTIENGESELLSCHAFT, 80333 München (DE)
(72) Erfinder: RAAF, Bernhard, D-81475 München (DE); BROMBA, Manfred, D-81379 München (DE)
(86) Internationale Anmeldenummer: DE9902572
(87) Internationale Veröffentlichungsnummer: WO00022581

(56) Entgegenhaltungen:
- EP-A- 0 329 166
- WO-A-98/10370
- WO-A-98/11750

## Beschreibung

Die vorliegende Erfindung betrifft eine Vorrichtung und ein Verfahren zur biometrischen Identifikation einer Person, die eine Authentifikationsfläche mit biometrischen Merkmalen besitzt. Derartige Vorrichtungen bzw. Verfahren finden ihren Einsatz beispielsweise bei elektronischen Geräten, vor deren Benutzung sich ein Benutzer authentifizieren muß. Beispiele für derartige elektronische Geräte sind Telekommunikationsgeräte wie z. B. Mobiltelefone, und Computer. Bei Mobiltelefonen ist es beispielsweise üblich, eine sogenannte Personal Identification Number (PIN) als Zugangsberechtigung zu verwenden. Dabei muß der Benutzer, um telefonieren zu können, eine bestimmte, nur ihm bekannte PIN eingeben. Das Mobiltelefon prüft diese PIN und gibt bei einer positiven Prüfung das Mobiltelefon zum Telefonieren frei (vgl. Stand der Technik der WO-A-98/11 750).

Ferner werden allgemeinere Identifikationscodes wie auch PINs bei Computern verwendet, um den Zugang zu bestimmten Daten oder Diensten des Computers oder eines Kommunikationsnetzes, an das der Computer angeschlossen ist, zu kontrollieren.

Gewöhnlich wird die Authentifikationsinformation über eine Tastatur der Vorrichtung eingegeben, die dann geprüft wird. Hierdurch wird die Berechtigung des eingebenden Benutzers von dem Mobiltelefon, dem Computer oder dem Kommunikationsnetz festgestellt.

Bei Mobiltelefonen nach dem GSM-Standard geschieht dies, indem eine Datenverarbeitungseinrichtung auf der sogenannten SIM-Card des Gerätes prüft, ob die eingegebene PIN zu der auf der SIM-Card gespeicherten Information paßt. Ist dies der Fall, gibt die SIM-Card das Telefon zur Benutzung frei. Nach dem GSM-Standard wird eine besonders hohe Sicherheit für den Telefonkunden dadurch erreicht, daß die PIN nicht im Mobiltelefon selbst gespeichert sein darf, sondern nur in verschlüsselter Form auf der SIM-Card gespeichert ist.

Ferner sind in letzter Zeit biometrische Identifikationsverfahren entwickelt worden, bei denen biologische bzw. biometrische Merkmale eines Benutzers zur Authentifikation verwendet werden. Beispielsweise wird der Fingerabdruck eines Benutzers als eindeutige Identifikation dieses Benutzers verwendet. Eine derartige biometrische Identifikation ist eine nicht einfache, aber komfortable und oft sehr sichere Methode, die Zuordnung und den Zugang einer bestimmten Person zu einem Dienst, einer Sache oder einem Ort zu gewährleisten (vgl. WO-A-98/11 750 ). Dabei weist die biometrische Identifikation gegenüber der PIN den Vorteil auf, daß sie nicht vergessen werden kann, und daß die biometrischen Merkmale nur sehr aufwendig oder überhaupt nicht kopierbar sind. Während die PIN reine Software ist, gibt es bei biometrischen Merkmalen immer eine mehr oder weniger eindeutige Zuordnung zur Hardware, d. h. zum Körper des berechtigten Benutzers. Da die PIN mit einer Ziffern- oder Texteingabe verbunden ist, die in der Regel eine Reihe von Tastendrücken erfordern, führt dies immer zu einer Komforteinbuße und damit unter Umständen zur Umgehung der Sicherheitsmaßnahmen. Beispielsweise kann bei manchen Mobilfunkdiensten der Benutzer die PIN auf sein eigenes Risiko ganz abschalten. Alle Mobilfunkdienste verzichten auf eine Bestätigung jedes einzelnen Telefongespräches durch die PIN. Dies führt dazu, daß ein Mobiltelefon im eingeschalteten Zustand von beliebigen Dritten und damit auch von unberechtigten Personen auf Kosten des Besitzers des Mobiltelefons benutzt werden kann. Moderne Mobiltelefone versuchen immer mehr, die Zifferneingabe von Telefonnummern auf Notfälle zu beschränken. Man ist sogar bestrebt, für einige Anwendungen bei Mobiltelefonen ganz ohne Tastatur auszukommen. In diesem Fall ist eine unverwechselbare biometrische Identifikation, wenn sie mit niedrigem Aufwand machbar ist, sehr vorteilhaft.

Bei den derzeitigen Mobiltelefonen ergibt sich jedoch das Problem, daß diese aus Gründen der Standardkonformität aufgrund des GSM-Standards wie vorstehend erläutert eine Speicherung der PIN auf der SIM-Card erfordern. Diese PIN darf gemäß dem GSM-Standard nicht zusätzlich im Mobiltelefon selbst gespeichert sein. Daraus ergibt sich das Problem, daß die PIN nicht durch eine biometrische Identifikation vollständig ersetzt werden kann, ohne den GSM-Standard zu ändern.

Aus diesem Grund ist ein Verfahren vorgeschlagen worden, bei dem aus biometrischen Merkmalen eine eindeutige Identifikationszahl hergeleitet werden kann. Diese eindeutige Identifikationszahl kann demnach als PIN verwendet werden und beispielsweise an die SIM-Karte eines Mobiltelefons weitergeleitet werden. Es wird bemerkt, daß in diesem Fall die PIN in dem Mobiltelefon selbst nicht gespeichert ist, sondern nur von diesem aus erfaßten biometrischen Merkmalen berechnet wird.

Wird eine Authentifikationsfläche einer Person, wie beispielsweise der Fingerabdruck der Person, verwendet, weist diese Authentifikationsfläche biometrische Merkmale auf, die die Person eindeutig identifizieren. Die gesamte Authentifikationsfläche, d. h. die Fingerabdrucksfläche, die zur Identifikation des Benutzers herangezogen werden kann, ist dabei gewöhnlich größer als die Identifikationsfläche eines Sensors, der die biometrischen Merkmale der Authentifikationsfläche der Person erfaßt. Dies bedeutet, daß der Sensor nur einen Teil der Authentifikationsfläche der Person zur Herleitung der eindeutigen Identifikationszahl verwendet. Demnach können Positionsschwankungen, beispielsweise der Fingerabdrucksfläche, auf der Identifikationsfläche des Sensors zu unterschiedlichen Identifikationszahlen führen. Derartige unterschiedliche Identifikationszahlen für einen Benutzer können nicht als PIN verwendet werden und erschweren die eindeutige Identifikation des Benutzers.

Es ist die Aufgabe der vorliegenden Erfindung, eine Vorrichtung und ein Verfahren zur biometrischen Identifikation einer Person, die eine Authentifikationsfläche mit biometrischen Merkmalen besitzt, bereitzustellen, bei denen unabhängig von Positionierschwankungen des auf der Identifikationsfläche des Sensors liegenden Teils der Authentifikationsfläche der Person eine eindeutige Identifikationszahl herleitbar ist.

Erfindungsgemäß wird eine Vorrichtung zur biometrischen Identifikation einer Person, die eine Authentifikationsfläche mit biometrischen Merkmalen besitzt, bereitgestellt, umfassend einen Sensor mit einer Identifikationsfläche zur Erfassung der biometrischen Merkmale des auf der Identifikationsfläche liegenden Teils der Authentifikationsfläche der Person, eine Vergleichseinrichtung zum Vergleichen der erfaßten biometrischen Merkmale des ersten Bereichs mit den in einem Speicher gespeicherten biometrischen Merkmalen eines Teils der Authentifikationsfläche einer berechtigten Person oder mehrerer berechtigter Personen und zum Bestimmen der relativen Lage der von dem Sensor erfaßten biometrischen Merkmale innerhalb des Teils der Authentifikationsfläche, und eine Recheneinrichtung zum Berechnen eines Identifikationscodes, der die durch den Sensor erfaßte Person identifiziert, aus den erfaßten biometrischen Merkmalen, die nicht in dem Speicher gespeichert sind, in Abhängigkeit von der relativen Lage der erfaßten biometrischen Merkmale, die in dem Speicher gespeichert sind, innerhalb der gespeicherten Identifikationsfläche.

Vorteilhaft an der erfindungsgemäßen Vorrichtung ist, daß die Identifikationsfläche des Sensors in zwei Bereiche aufgeteilt wird, wobei der eine Bereich zur Lagebestimmung innerhalb der Authentifikationsfläche dient, während der zweite Bereich zur Erzeugung einer eindeutigen Identifikationszahl herangezogen wird, wobei die biometrischen Merkmale dieses Bereichs in der Vorrichtung nicht gespeichert sind. Dadurch wird sichergestellt, daß, selbst wenn unterschiedliche Ausschnitte der Authentifikationsfläche des Benutzers auf der Identifikationsfläche des Sensors aufliegen, immer ein eindeutiger, den Benutzer kennzeichnender Identifikationscode berechnet werden kann.

In einer Ausbildung der Erfindung erfaßt der Sensor den Fingerabdruck einer Person, wobei die Authentifikationsfläche der Person die möglichen Fingerabdrucksflächen eines Fingers dieser Person umfaßt, die nicht zum Berechnen des Identifikationscodes verwendet werden.

Vorteilhaft an der Verwendung eines Fingerabdrucksensors ist, daß der Benutzer einerseits ohne größere Umstände einen Finger auf den Sensor legen kann, und andererseits die biometrischen Merkmale der Fingerabdrucksfläche eine besonders sichere Identifikation des Benutzers erlauben.

Ferner wird gemäß der vorliegenden Erfindung ein entsprechendes Verfahren zur biometrischen Identifikation einer Person mit einer Authentifikationsfläche mit biometrischen Merkmalen bereitgestellt.

Dadurch, daß bei einer Ausbildung des Verfahrens die Identifikationsfläche so unterteilt wird, daß der Bereich, durch den die Lagebestimmung innerhalb der Authentifikationsfläche erfolgt, die Fläche vollständig umschließt, durch die der Identifikationscode berechnet wird, wird gewährleistet, daß der zweite eingeschlossene Bereich immer ausreichend biometrische Merkmale aufweist, um einen eindeutigen Identifikationscode zu berechnen.

Es werden nun Ausführungsbeispiele der vorliegenden Erfindung anhand der Zeichnungen erläutert.
Fig. 1 zeigt ein Ausführungsbeispiel der vorliegenden Erfindung, und
Fig. 2 zeigt eine mögliche Lage des von der Identifikationsfläche des Sensors erfaßten Bereichs der Authentifikationsfläche einer Person.

In dem hier erläuterten Ausführungsbeispiel wird die vorliegende Erfindung anhand einer Vorrichtung und einem Verfahren erläutert, das den Fingerabdruck einer Person zur Identifikaion dieser Person verwendet. Somit ist die Authentifikationsfläche der Person ein Teil der gesamten Fingerabdrucksfläche eines Fingers dieser Person. Ferner sind die biometrischen Merkmale der Fingerabdrucksfläche die Linienendungen und Gabelungen des entsprechenden Fingerabdrucks.

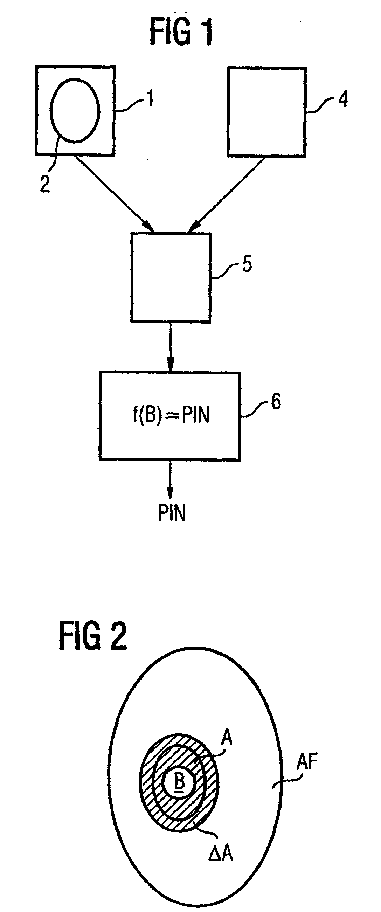

Fig. 1 zeigt schematisch ein Ausführungsbeispiel der erfindungsgemäßen Vorrichtung. Der Sensor 1 dient der Erfassung eines Teils der Gesamt-Fingerabdruckfläche eines Fingers der Person, die zu identifizieren ist. Der Sensor 1 weist hierzu eine Identifikationsfläche 2 auf, auf die der Benutzer den Finger auflegt. Da die Identifikationsfläche 2 kleiner als die Gesamt-Fingerabdrucksfläche eines Fingers ist, wird über die Identifikationsfläche 2 ein bestimmter Ausschnitt des Fingerabdrucks erfaßt. Über die Identifikationsfläche 2 werden die biometrischen Merkmale des aufliegenden Teils der Gesamt-Fingerabdruckfläche erfaßt. Die von dem Sensor 1 erfaßten Informationen werden einer Vergleichseinrichtung 5 zugeführt.

In einem Speicher 4 wird bei der Initialisierung der Vorrichtung, d. h. vor der ersten Identifikation einer Person, der Teil der gesamten Authentifikationsfläche der berechtigten Person(en) gespeichert, der zur Lagebestimmung der erfaßten biometrischen Merkmale erforderlich ist. Beispielsweise kann ein Bereich der Fläche A - B +ΔA gespeichert werden, wobei ΔA einen Ring mit einer bestimmten Toleranzbreite um A bildet. Dies bedeutet in dem hier beschriebenen Ausführungsbeispiel, daß die zur Bestimmung des Identifikationscodes dienende Fingerabdrucksfläche eines Fingers der berechtigten Person(en) im Speicher 4 nicht gespeichert ist.

Die Vergleichseinrichtung 5, die sowohl mit dem Sensor 1 als auch mit dem Speicher 4 verbunden ist, vergleicht die erfaßten biometrischen Merkmale mit den in dem Speicher 4 gespeicherten biometrischen Merkmalen. Aus einer Übereinstimmung der biometrischen Merkmale beispielsweise eines Bereichs A mit einem geometrischen Bereich innerhalb der in dem Speicher 4 gespeicherten Authentifikationsfläche ergibt sich die relative Lage des erfaßten Bereichs A innerhalb der Authentifikationsfläche. Aus diesem Vergleich ergibt sich die Information darüber, welcher Teil des Fingerabdrucks auf die Identifikationsfläche 2 des Sensors 1 aufgelegt worden ist. Somit dient der Außenbereich A der Zentrierung, während der von dem Bereich A umschlossene Mittenbereich B später zur Erzeugung des Identifikationscodes bzw. der PIN herangezogen wird. Die Bereiche A, B werden somit vorteilhafterweise so gewählt, daß der Außenbereich A einen Ring mit biometrischen Merkmalen bildet, der den Mittenbereich B vollständig umschließt. Es ist jedoch in einer anderen Ausführungsform der Erfindung auch eine andere Aufteilung der biometrischen Merkmale in zwei Bereiche möglich. Beispielsweise könnte die rechte und linke Hälfte oder die obere und untere Hälfte als Unterteilung gewählt werden. Ferner könnten die Verzweigungen und die Linienenden des Fingerabdrucks als Unterteilung dienen.

Für die Zentrierung ist es nicht unbedingt erforderlich, daß der Außenbereich A vollständig ist, d. h. überall biometrische Merkmale enthält. Bei Auflageschwankungen des Fingers auf der Identifikationsfläche 2 kann es vorkommen, daß am äußersten Rand des Außenbereichs A keine biometrischen Merkmale erfaßt werden. Werden jedoch in einem geschlossenen, den Mittenbereich B umschließenden Ring des Außenbereichs A biometrische Merkmale nachgewiesen und durch Vergleich mit der in dem Speicher 4 gespeicherten Authentifikationsfläche lagebestimmt, ergibt sich, daß zumindest der Mittenbereich B vollständig und lagerichtig zur Verfügung steht. Ferner ist es in einer Lernphase bei der Initialisierung der Vorrichtung möglich, daß ein Algorithmus entscheidet, was zum Mittenbereich B und was zum Außenbereich A gehört.

Die Vergleichseinrichtung 5 führt das Ergebnis der Lagebestimmung des durch den Sensor 1 erfaßten Teils der Gesamt-Fingerabdrucksfläche einer Recheneinrichtung 6 zu. Die Recheneinrichtung 6 berechnet aus den biometrischen Merkmalen des Mittenbereichs B, dessen relative Lage aus der Lage des Bereichs A bestimmt wird, einen Identifikationscode, der die durch den Sensor 1 erfaßte Person eindeutig identifiziert. Dieser Identifikationscode kann beispielsweise eine PIN sein, die der SIM-Karte des Mobiltelefons zugeführt wird.

Somit ist weder die PIN noch sind die biometrischen Merkmale, aus denen die PIN berechnet wird, in der erfindungsgemäßen Vorrichtung selbst gespeichert. Die Vorrichtung hat einzig in dem Speicher 4 einen Teil der Authentifikationsfläche mit biometrischen Merkmalen gespeichert. Über den Sensor 1 werden biometrische Merkmale einer Person erfaßt und über die Recheneinrichtung 6 in eine PIN umgewandelt, die dann ausgegeben werden kann. Ferner ist die PIN bzw. der Identifikationscode der Person auch dann herleitbar, wenn bei verschiedenen Identifikationen jeweils ein anderer Teil der Authentifikationsfläche der Person auf der Identifikationsfläche 2 des Sensors 1 aufliegt.

Mittels Fig. 2 soll das Verhältnis der Gesamtauthentifikationsfläche der Person zu dem in dem Speicher 4 gespeicherten Teil der Authentifikationsfläche und zu dem über die Identifikationsfläche des Sensors 1 erfaßten Teil dieser Authentifikationsfläche veranschaulicht werden. Zur Veranschaulichung wird wiederum als Beispiel die Identifikation einer Person über die biometrischen Merkmale eines Fingerabdrucks herangezogen. In diesem Fall ist die Authentifikationsfläche AF die Fingerabdrucksfläche eines Fingers der Person. Diese Authentifikationsfläche weist in ihrem gesamten Bereich biometrische Merkmale auf, die eine Person eindeutig identifizieren. Davon ist der schraffiert gezeichnete Teil in dem Speicher 4 gespeichert. Dieser Teil ergibt sich aus der Fläche des Bereichs A abzüglich der Fläche des Bereichs B zuzüglich eines Toleranzbereichs ΔA für den Bereich A.

Wenn die Person ihren Finger, über den die Identifikation erfolgen soll, auf die Identifikationsfläche 2 des Sensors 1 auflegt, erfaßt der Sensor 1 einen bestimmten Teil der Gesamt-Fingerabdrucksfläche AF. Dies wird in Fig. 2 durch die die Fläche A umschließende Ellipse innerhalb des Bereichs AF veranschaulicht. Je nach Lage des Fingers auf der Identifikationsfläche 2 des Sensors 1 verschiebt sich diese Ellipse innerhalb des im Speicher 4 gespeicherten Teils des Bereichs AF.

Der über den Sensor 1 erfaßte Teil der Authentifikationsfläche wird in zwei Bereiche A und B unterteilt. Nun können die biometrischen Merkmale des Bereichs A auf biometrische Merkmale des im Speicher 4 gespeicherten Teils der Fläche AF verglichen werden, die geometrisch gleich angeordnet sind. Ist eine Übereinstimmung bestimmt worden, ergibt sich eindeutig die Lage des Bereichs A innerhalb der Authentifikationsfläche AF und somit auch die Lage des zweiten Bereichs B, da dieser in einer bestimmten, hier geometrischen Beziehung zu dem Bereich A steht. Aus dieser Information und den biometrischen Merkmalen des zweiten Bereichs B kann dann der Identifikationscode bzw. die PIN berechnet werden.

## Patentansprüche

1. Vorrichtung zur biometrischen Identifikation einer Person, die eine Authentifikationsfläche (AF) mit biometrischen Merkmalen besitzt, umfassend:
- einen Sensor (1) mit einer Identifikationsfläche (2) zur Erfassung der biometrischen Merkmale des auf der Identifikationsfläche (2) liegenden Teils der Authentifikationsfläche (AF) der Person,
- eine Vergleichseinrichtung (5) zum Vergleichen der erfaßten biometrischen Merkmale mit den in einem Speicher (4) gespeicherten biometrischen Merkmalen eines Teils der Authentifikationsfläche (AF) einer berechtigten oder mehrerer berechtigter Person(en) zum Bestimmen der relativen Lage der von dem Sensor (1) erfaßten biometrischen Merkmale des ersten erfaßten Bereichs (A) innerhalb des Teils der Authentifikationsfläche (AF), und
- eine Recheneinrichtung (5) zum Berechnen eines Identifikationscodes (PIN), der die durch den Sensor (1) erfaßte Person identifiziert, aus den erfaßten biometrischen Merkmalen, die nicht in dem Speicher (4) gespeichert sind, in Abhängigkeit von der relativen Lage der erfaßten biometrischen Merkmale, die in dem Speicher (4) gespeichert sind, innerhalb der gespeicherten Authentifikationsfläche (AF).

2. Vorrichtung gemäß Anspruch 1,
**dadurch gekennzeichnet,**
**daß** der Sensor (1) einen Fingerabdruck erfaßt, wobei die Authentifikationsfläche die Teile der möglichen Fingerabdrucksfläche eines Fingers umfassen, die nicht zum Berechnen des Identifikationscodes (PIN) verwendet werden.

3. Verfahren zur biometrischen Identifikation einer Person mit einer Authentifikationsfläche (AF) mit biometrischen Merkmalen, umfassend die folgenden Schritte:
- Speichern von biometrischen Merkmalen eines Teils der Authentifikationsfläche (AF) einer berechtigten oder mehrerer berechtigter Person(en),
- Erfassen biometrischer Merkmale des auf einer Identifikationsfläche (2) eines sensors (1) liegenden Teils der Authenfikationsfläche (AF) der Person,
- Vergleichen der erfaßten biometrischen Merkmale mit den gespeicherten biometrischen Merkmalen der Authentifikationsfläche (AF) zum Bestimmen der relativen Lage der erfaßten biometrischen Merkmale innerhalb des gespeicherten Teils der Authentifikationsfläche (AF),
- Berechnen eines Identifikationscodes (PIN), der die durch den Sensor (1) erfaßte Person identifiziert, aus den erfaßten biometrischen Merkmalen, die nicht in dem Speicher (4) gespeichert sind, in Abhängigkeit von der relativen Lage der erfaßten biometrischen Merkmale, die in dem Speicher (4) gespeichert sind, innerhalb der gespeicherten Authentifikationsfläche (AF).

4. Verfahren gemäß Anspruch 3
**dadurch gekennzeichnet,**
**daß** biometrische Merkmale des Fingerabdrucks einer Person erfaßt werden, und die Authentifikationsfläche (AF) die Teile der möglichen Fingerabdrucksflächen eines Fingers der Person umfassen, die nicht zum Berechnen des Identifikationscodes (PIN) verwendet werden.

5. Verfahren gemäß Anspruch 3 oder 4,
**dadurch gekennzeichnet,**
**daß** ein erster Bereich (A) mit biometrischen Merkmalen, die in dem Speicher (4) gespeichert sind, einen zweiten Bereich (B) mit biometrischen Merkmalen, die nicht in dem Speicher (4) gespeichert sind, vollständig umschließt.

6. Verfahren gemäß einem der Ansprüche 3 bis 5,
**dadurch gekennzeichnet,**
**daß** nur dann ein Identifikationscode (PIN) berechnet wird, wenn der erfaßte erste Bereich (A) einen geschlossenen, den zweiten Bereich (B) umschließenden Ring mit biometrischen Merkmalen bildet.

## Claims

1. Apparatus for the biometric identification of a person, who has an authentication area (AF) containing biometric features, comprising:
- a sensor (1) having an identification area (2) for detecting the biometric features of the part of the person's authentication area (AF) which is situated on the identification area (2),
- a comparison device (5) for comparing the detected biometric features with the biometric features, stored in a memory (4), of a part of the authentication area (AF) of an authorized person or of a plurality of authorized persons in order to determine the relative position of the biometric features, detected by the sensor (1), of the first detected region (A) within the part of the authentication area (AF), and
- a computation device (5) for calculating an identification code (PIN), which identifies the person detected by the sensor (1), from the detected biometric features which are not stored in the memory (4) on the basis of the relative position of the detected biometric features which are stored in the memory (4) within the stored authentication area (AF).

2. Apparatus according to Claim 1,
**characterized**
**in that** the sensor (1) detects a fingerprint, the authentication area comprising those parts of the possible fingerprint area of a finger which are not used to calculate the identification code (PIN).

3. Method for the biometric identification of a person, who has an authentication area (AF) containing biometric features, comprising the following steps:
- biometric features of a part of the authentication area (AF) of an authorized person or of a plurality of authorized persons are stored,
- biometric features of the part of the person's authentication area (AF) which is situated on an identification area (2) of a sensor (1) are detected,
- the detected biometric features are compared with the stored biometric features of the authentication area (AF) in order to determine the relative position of the detected biometric features within the stored part of the authentication area (AF),
- an identification code (PIN) which identifies the person detected by the sensor (1) is calculated from the detected biometric features which are not stored in the memory (4) on the basis of the relative position of the detected biometric features which are stored in the memory 4 within the stored authentication area (AF).

4. Method according to Claim 3,
**characterized**
**in that** biometric features of a person's fingerprint are detected, and the authentication area (AF) comprises those parts of the possible fingerprint areas of a finger of the person which are not used to calculate the identification code (PIN).

5. Method according to Claim 3 or 4,
**characterized**
**in that** a first region (A) containing biometric features which are stored in the memory (4) completely surrounds a second region containing biometric features which are not stored in the memory (4).

6. Method according to one of Claims 3 to 5,
**characterized**
**in that** an identification code (PIN) is calculated only if the detected first region (A) forms a closed ring, surrounding the second region (B), containing biometric features.

## Revendications

1. Dispositif destiné à l'identification biométrique d'une personne et qui a une surface d'authentification (AF) comportant des caractéristiques biométriques, comprenant:
- un capteur (1) ayant une surface d'identification (2) destinée à la saisie des caractéristiques biométriques de la partie de la surface d'authentification (AF) de la personne qui se trouve sur la surface d'identification (2),
- un dispositif de comparaison (5), destiné à la comparaison des caractéristiques biométriques saisies aux caractéristiques biométriques, qui sont enregistrées dans une mémoire 4, d'une partie de la surface d'authentification (AF) d'une personne habilitée ou de plusieurs personnes habilitées, en vue de déterminer la position relative, à l'intérieur de la partie de la surface d'authentification (AF), des caractéristiques biométriques, saisies par le capteur (1), de la première zone (A) saisie et
- un dispositif de calcul (5) destiné à calculer un code identificateur (PIN), qui identifie la personne détectée par le capteur (1), à partir des caractéristiques biométriques saisies, qui ne sont pas enregistrées dans la mémoire (4), en fonction de la position relative, à l'intérieur de la surface d'authentification (AF) enregistrée, des caractéristiques biométriques saisies, qui sont enregistrées dans la mémoire (4).

2. Dispositif selon la revendication 1
**caractérisé par le fait**
**que** le capteur (1) détecte une empreinte digitale, la surface d'authentification comprenant les parties de la surface possible de l'empreinte digitale d'un doigt, qui ne sont pas utilisées pour le calcul du code identificateur (PIN).

3. Procédé destiné à l'identification biométrique d'une personne ayant une surface d'authentification (AF) comportant des caractéristiques biométriques, comprenant les étapes suivantes:
- mémorisation des caractéristiques biométriques d'une partie de la surface d'authentification (AF) d'une personne habilitée ou de plusieurs personnes habilitées,
- saisie de caractéristiques biométriques de la partie de la surface d'authentification (AF) de la personne qui se trouve sur une surface d'identification (2) d'un capteur (1),
- comparaison des caractéristiques biométriques saisies aux caractéristiques biométriques de la surface d'authentification (AF) mémorisées en vue de déterminer la position relative, à l'intérieur de la partie mémorisée de la surface d'authentification (AF), des caractéristiques biométriques saisies,
- calcul d'un code identificateur (PIN), qui identifie la personne détectée par le capteur (1), à partir des caractéristiques biométriques saisies, qui ne sont pas enregistrées dans la mémoire (4), en fonction de la position relative, à l'intérieur de la surface d'authentification (AF) mémorisée, des caractéristiques biométriques saisies, qui sont enregistrées dans la mémoire (4).

4. Procédé selon la revendication 3
**caractérisé par le fait**
**que** des caractéristiques biométriques de l'empreinte digitale d'une personne sont saisies et que la surface d'authentification (AF) comprend les parties des surfaces possibles de l'empreinte digitale d'un doigt de la personne, qui ne sont pas utilisées pour le calcul du code identificateur (PIN).

5. Procédé selon la revendication 3 ou 4
**caractérisé par le fait**
**qu'**une première zone (A) comportant des caractéristiques biométriques, qui sont enregistrées dans la mémoire (4), englobe entièrement une deuxième zone (B) comportant des caractéristiques biométriques, qui ne sont pas enregistrées dans la mémoire (4).

6. Procédé selon l'une des revendications 3 à 5
**caractérisé par le fait**
**qu'**un code identificateur (PIN) n'est calculé que lorsque la première zone (A) saisie forme un anneau fermé, entourant la deuxième zone (B) et comportant des caractéristiques biométriques.
